# EUROPÄISCHE PATENTANMELDUNG

(11) **EP 1 986 075 A2**
(43) Veröffentlichungstag der Anmeldung: **29.10.2008**
(21) Anmeldenummer: 07122640.1
(22) Anmeldetag: 07.12.2007
(51) Int. Cl.: G06F 1/18

(54) **Gehäuse für einen Computer**

(30) Priorität: 10.04.2007 DE 102007016903
(71) Anmelder: Fujitsu Siemens Computers GmbH, 80807 München (DE)
(72) Erfinder: Neukam, Wilhelm, 86399 Bobingen (DE)
(74) Vertreter: Epping - Hermann - Fischer

(57) **Zusammenfassung**

Die Erfindung betrifft ein Gehäuse für einen Computer mit einem Einschubschacht für Einschubgehäuse. Dabei ist eine Befestigungsvorrichtung (10) vorgesehen, welche ein Einschubgehäuse (20) einer Computerkomponente in einem Einschubschacht eines Computergehäuses fixiert und an einer Seitenwandung des Einschubschachtes angeordnet ist. Die Befestigungsvorrichtung umfasst zumindest einen federnd gelagerten Verriegelungsbolzen (40), wobei die Befestigungsvorrichtung (10) dazu ausgebildet ist den Verriegelungsbolzen (40) durch das Einschieben des Einschubgehäuses (20) in den Einschubschacht vorzuspannen und mittels der Federkraft beim Erreichen einer Endposition in einer Bohrung (50) des Einschubgehäuses (20) zu halten.

## Beschreibung

Die Erfindung betrifft ein Gehäuse für einen Computer mit einem Einschubschacht für Einschubgehäuse.

Ein Einschubschacht eines Gehäuses für einen Computer ist vorgesehen, um darin bevorzugt ein Einschubgehäuse für eine Computerkomponente aufzunehmen. Das Einschubgehäuse sollte in dem Einschubschacht befestigt sein, um einerseits eine fehlerfreie Funktion und andererseits ein unbeabsichtigtes Entfernen zu vermeiden. Um dies zu erreichen ist eine Befestigungsvorrichtung vorgesehen. Als Befestigungsvorrichtung findet zum Beispiel eine Schraubverbindung Verwendung, welche durch eine Bohrung an einer Seitenwand des Einschubschachtes in einer Wirkverbindung mit einer Gewindebohrung an dem Einschubgehäuse für Computerkomponenten steht. Computerkomponenten sind zum Beispiel Festplatten, Diskettenlaufwerke, CD-Laufwerke, Schnittstellenmodule oder ähnliches. Zur einfachen Montage werden diese Gehäuse in Einschubschächte eines Computergehäuses eingeschoben und dort fixiert. Die Fixierung findet dort dann mittels der bereits erwähnten Schraubverbindungen an den Seitenwänden des Einschubschachtes statt.

Eine derartige Fixierung ist zeitaufwändig und damit kostenintensiv herzustellen. Denn eine Schraubverbindung herzustellen bedarf einer Vielzahl von Einzelarbeitsgängen, welche jeder für sich zeitintensiv ist. Soll ein Einschubgehäuse mittels einer Schraubverbindung fixiert werden, so muss das Einschubgehäuse exakt in den Einschubschacht eingeschoben werden, bis die Bohrungen des Einschubs in der Wandung des Einschubschachtes mit den Gewindebohrungen im Einschubgehäuse übereinstimmen. Anschließend ist die Schraubverbindung durch Eindrehen der Schraube mit mehrmaligen Umdrehungen der Schraube herzustellen. Um eine sichere und qualitativ hochwertige Fixierung zu erhalten, sind zumindest vier Schraubverbindungen pro Einschubgehäuse, vorzugsweise jedoch acht Schraubverbindungen vorzusehen. Mit jeder zusätzlichen Schraubverbindung erhöht sich der zeitliche Aufwand zur Fixierung des Einschubgehäuses in den Einschubschacht.

In der Druckschrift DE 20109697 U1 ist eine Einschubschacht gezeigt, für ein oder mehrere Speicherlaufwerke eines Computers. Der Einschubschacht weist Mittel zur Befestigung in einem Computergehäuse auf und umfasst Befestigungsmittel zur Fixierung von Speicherlaufwerken. Wobei an einer von zwei Seitenwänden, in der Einschubrichtung des Laufwerks hintereinander liegende, nach innen vorstehende Federelemente angeordnet sind, die an ihrer am weitesten von der Wand abstehenden Stelle eine Nase aufweisen. An der dazu gegenüber liegenden Seitenwand des Einschubschachts sind Löcher angeordnet, die zur Fixierung des Laufwerks mit Schrauben vorgesehen sind.

In der Druckschrift DE 29817864 U1 ist eine Positioniereinrichtung für Schreib-Lese-Vorrichtungen, beziehungsweise Datenlaufwerke, von Computern gezeigt. Diese Positioniervorrichtung ermöglicht einfach, leicht und schnell einzelne oder nebeneinander liegende Datenlaufwerke zu installieren oder zu entfernen, wobei eine einzige Schraube benutzt wird, um die Datenlaufwerke zu positionieren. Dabei ist ein gewölbter Block mit einer mittigen Gewindelochbohrung vorgesehen, der an einer der Seitenwände des Computergehäuses angeordnet ist. Auf zwei Seiten des leicht gewölbten Blocks sind Durchgangslöcher vorgesehen, die Positionierlöchern an den Seiten der Laufwerke entsprechen. Eine Befestigungsplatte mit zwei umgebogenen Enden wird, wenn die Schreib-Lese-Einrichtung entlang von Gleitschienen in das Computergehäuse eingeschoben und darin positioniert wird so angeordnet, dass die Enden der Befestigungsplatte durch die Durchgangslöcher in die Positionierlöcher der Datenlaufwerke eingreifen und dieses positionieren. Eine Schraube wird dann durch ein mittiges Loch der Befestigungsplatte in das mittige Gewindeloch des gewölbten Blocks eingeschraubt. Damit ist Datenlaufwerk positioniert.

Alle diese Lösungen benötigen zumindest eine Schraubverbindung um ein Einschubgehäuse aufzunehmen. Umfasst ein Gehäuse für einen Computer mehrere Einschubschächte, in welche Einschubgehäuse aufgenommen werden sollen, steigt damit der Aufwand zur Herstellung eines Computers im Montagebereich stark an.

Massenprodukte wie Computer unterliegen einem hohen Preis und Wettbewerbsdruck. Aus diesem Grunde ist es für Hersteller von Computern von existentieller Bedeutung, sowohl preislich als auch qualitativ wettbewerbsfähig zu bleiben. Eine Schraubverbindung ersatzlos entfallen zu lassen, um damit die Herstellungskosten für einen Computer zu senken, senkt auch die Qualität des Computers und eignet sich demzufolge nicht, die Wettbewerbsfähigkeit zu erhalten.

Es ist die Aufgabe der Erfindung, den Zeitaufwand bei der Montage eines Computers zu verringern und ohne dabei die Qualität des Computers zu beeinträchtigen.

Diese Aufgabe wird durch die Merkmale des Patentanspruchs 1 gelöst und durch die Merkmale der untergeordneten Patentansprüche 2 bis 11 weitergebildet.

Dabei ist ein Gehäuse für einen Computer mit einem Einschubschacht für Einschubgehäuse mit einer Befestigungsvorrichtung vorgesehen, welche ein Einschubgehäuse einer Computerkomponente in einem Einschubschacht eines Computergehäuses fixiert und an einer Seitenwandung des Einschubschachtes angeordnet ist. Die Befestigungsvorrichtung umfasst zumindest einen federnd gelagerten Verriegelungsbolzen, wobei die Befestigungsvorrichtung ausgebildet ist durch das Einschieben des Einschubgehäuses in den Verriegelungsbolzen vorzuspannen und mittels einer Federkraft beim Erreichen einer Endposition in einer Bohrung des Einschubgehäuses zu halten.

Damit ist erreicht, dass in dieser Endposition das Einschubgehäuse im Einschubschacht fixiert ist. Die Fixierung des Einschubgehäuses im Einschubschacht erfolgt mittels des Verriegelungsbolzens. Ob nun ein, zwei vier oder acht Verriegelungsbolzen vorgesehen sind, erhöht den Zeitaufwand zur Fixierung des Einschubgehäuses in keiner Weise, da alle Befestigungsvorrichtungen beziehungsweise alle Verriegelungsbolzen gleichzeitig in die jeweils dafür vorgesehenen Bohrungen am Einschubgehäuse verrasten.

Die federnde Lagerung des Verriegelungsbolzens ist bevorzugt mittels eines längs gestreckten Blattfederelements gebildet. Damit kann der Verriegelungsbolzen an einem federnden Ende des Blattfederelements angeordnet sein. Das Blattfederelement ist seinerseits vorzugsweise an der Wandung des Einschubschachtes angeordnet, beziehungsweise dort derart festgelegt, dass der Verriegelungsbolzen nur in einer Richtung hin und her bewegbar ist. Durch die Verwendung eines Blattfederelements ist diese eingeschränkte Bewegbarkeit einfach zu bilden, da ein Blattfederelement im Wesentlichen nur in einer Richtung federnd formbar ist.

Das Blattfederelement ist bevorzugt derart ausgebildet, dass es an einer Schwenkachse, welche senkrecht zur Längsachse in einem Zentrumsbereich des Blattfederelementes angeordnet ist, schwenkbar an der Wandung des Einschubschachts gelagert ist. Damit ist das Blattfederelement schwenkbar um diese Achse gelagert. Durch die Anordnung der Achse im Zentrumsbereich des Blattfederelementes wird erreicht, dass das Blattfederelement beidseitig der Schwenkachse sich erstreckt, wobei der Verriegelungsbolzen an einem zur Schwenkachse beabstandeten Bereich, in einem ersten Endbereich des Blattfederelements, angeordnet ist. Durch die Schwenkbarkeit wird erreicht, dass dem Verriegelungsbolzen eine Vorspannung beim Montagevorgang beziehungsweise beim Einschieben des Einschubgehäuses gegeben werden kann. Durch die Vorspannung erfolgt das Einrasten des Verriegelungsbolzens schneller und zuverlässiger in die dafür vorgesehene Bohrung am Einschubgehäuse.

An einem zweiten Endbereich des Blattfederelementes, welcher gegenüber dem ersten Endbereich angeordnet ist, ist vorzugsweise eine Anlaufschräge vorgesehen. Die Anlaufschräge ist durch eine stumpfwinkelige Abwinkelung gebildet. Die stumpfwinkelige Abwinkelung ermöglicht ein leichteres Vorspannen des Blattfederelementes dadurch, dass ein Mittel, welches zum Beispiel am Einschubgehäuse festgelegt ist, das Blattfederelement an der Anlaufschräge unterfährt und damit das Blattfederelement an dem zweiten Endbereich anhebt. Durch das Anheben an dieser Stelle wird über die schwenkbare Lagerung das Blattfederelement an dem gegenüberliegenden ersten Endbereich angesenkt und das Blattfederelement und damit der Verriegelungsbolzen vorgespannt.

Zur Aufnahme von Einschubgehäusen, die kein Mittel aufweisen, mit dem ein Unterfahren der Anlaufschräge wie in der oben beschriebenen Weise möglich ist, wie zum Beispiel Einschubgehäuse, welche an den Seitenwänden lediglich Gewindebohrungen zur Befestigung aufweisen, ist bevorzugt ein Anlaufschieber vorgesehen. Der Anlaufschieber ist mittels des Einschubgehäuses entgegen der Anlaufschräge bewegbar. Mit dem Einschieben des Einschubgehäuses in den Einschubschacht wird der am Einschubschacht angeordnete Anlaufschieber entgegen die Anlaufschräge des Blattfederelements geschoben, so dass das Blattfederelement an dem zweiten Endbereich durch den Anlaufschieber angehoben wird und damit am ersten Endbereich beziehungsweise am Verriegelunsbolzen vorgespannt wird.

Vorzugsweise ist weiter ein Stützfederelement vorgesehen, welches dem Drehmoment entgegenwirkt, welches durch den Anlaufschieber nach der oben beschriebenen Weise erzeugt wird. Damit wird erreicht, dass in einer Ruhelage, wenn zum Beispiel kein Einschubgehäuse in den Einschubschacht eingeschoben ist, das Blattfederelement in einer vorbestimmten Position durch die Federkraft des Stützfederelementes gehalten ist.

Der Anlaufschieber ist an der Wandung des Einschubschachts bevorzugt derart angeordnet, dass er in einer Ein- und einer Ausschubrichtung bewegbar ist. Somit wird der Anlaufschieber durch das Einschieben des Einschubgehäuses entgegen der Anlaufschräge bewegt und wird beim Herausnehmen des Einschubgehäuses mittels eines dafür vorgesehenen Federelementes in seine Ruhelage bewegt. Die Ruhelage des Anlaufschiebers ist durch die Lage definiert, die der Anlaufschieber einnimmt, wenn der Einschubschacht leer ist. Beim Einschieben eines Einschubgehäuses in den Einschubschacht wird demzufolge der Anlaufschieber entgegen der Federkraft dieses Federelementes bewegt.

Der Anlaufschieber weist in einer bevorzugten Weiterbildung einen Mitnehmer auf, welcher so ausgebildet ist, dass beim Einschieben des Einschubgehäuses der Mitnehmer in Wirkverbindung mit einem Element des Einschubgehäuses steht. Beim Einschieben des Einschubgehäuses in den Einschubschacht wird der Anlaufschieber in seine Arbeitsposition in Richtung der Anlaufschräge verschoben. Ein derart wirkendes Element des Einschubgehäuses ist zum Beispiel eine Frontblende des Einschubgehäuses, welche am Übergang von Einschubgehäuse zur Frontblende eine Abstufung aufweist. An dieser Abstufung greift der Mitnehmer des Anlaufschiebers ein. Zur leichten Bedienung und kräftearmen Montage des Einschubgehäuses ist der Anlaufschieber vorzugsweise ebenfalls mit einer Anlaufschräge ausgestattet. Diese ist, im Rahmen eines vorbestimmten Toleranzbereichs, parallel zu der Ebene der Anlaufschräge des Federelements gebildet.

Im Folgenden ist die Erfindung anhand eines Ausführungsbeispiels unter Bezugnahme auf zwei Figuren näher erläutert.

Es zeigt:
- Figur 1: eine Befestigungsvorrichtung,
- Figur 2,: die Befestigungsvorrichtung in drei verschiedenen Montagezuständen.

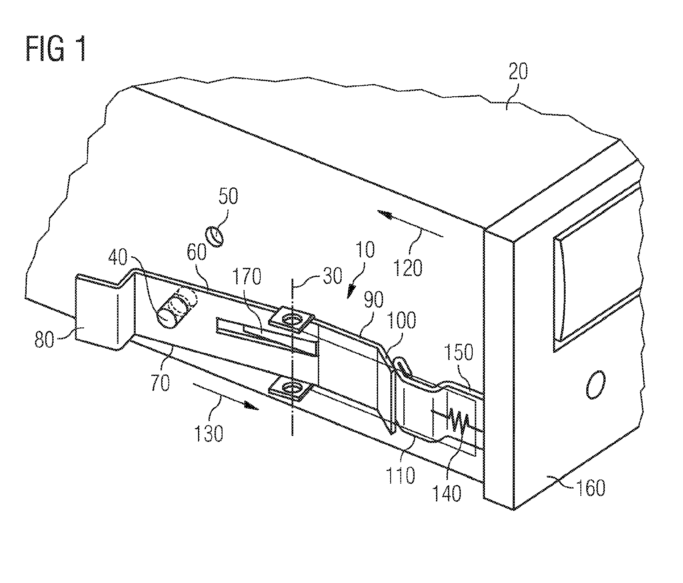

Die Figur 1 zeigt ein Ausführungsbeispiel einer Befestigungsvorrichtung 10 mit einem Einschubgehäuse 20. Die Befestigungsvorrichtung 10 ist gestellfest an einem Gehäuse für einen Computer, beziehungsweise an einer Seitenwand eines Einschubschachtes des Computergehäuses angeordnet. Mittels einer Schwenkachse 30 ist die gestellfeste Anordnung schwenkbar ausgebildet. Aus Gründen der Übersichtlichkeit sind Elemente des Einschubschachtes und des den Einschubschacht umfassenden, Computergehäuses in den Figuren nicht gezeigt. Der Einschubschacht ist derart ausgebildet, dass das Einschubgehäuse darin innerhalb vorbestimmter Maßtoleranzen eng geführt ist, so dass das Einschubgehäuse nur in den Einschubschacht hinein oder aus dem Einschubschacht heraus bewegbar ist.

Das in der Figur 1 gezeigte Ausführungsbeispiel der Befestigungsvorrichtung 10 weist einen Verriegelungsbolzen 40 auf, welcher in einem verriegelten Zustand in eine Bohrung 50 des Einschubgehäuses 20 verrastet. Die Befestigungsvorrichtung 10 ist aus einem längs gestreckten Blattfederelement 60 gebildet, das sich ähnlich einer Wippe zu beiden Seiten der Schwenkachse 30 erstreckt. Der Verriegelungsbolzen 40 ist an einem ersten Endbereich 70 des Blattfederelements 60 angeordnet. Zudem ist an dem ersten Endbereich 70 des Blattfederelements 60 an dem auch der Verriegelungsbolzen 40 angeordnet ist eine L-förmige Abwinkelung 80 ausgebildet. Diese Abwinkelung 80 ist als Bedienelement verwendbar. Dies eignet sich für den Fall, dass ein montiertes Einschubgehäuse 20 aus dessen Verriegelung und Verrastung herausgenommen und zur Demontage aus dem Einschubschacht herausgezogen werden soll. Mittels des Bedienelementes das in Form der L-förmigen Abwinklung 80 gebildet ist, wird der Rasthaken 40 durch einen Anwender, durch einen Bediener oder einen Monteur, aus der Bohrung 50 herausgehoben, und das Einschubgehäuse 20 ist aus der Verrastung und Verankerung beziehungsweise der Fixierung gelöst.

Ein zweiter Endbereich 90 ist gegenüberliegend dem ersten Endbereich des längs gestreckten Blattfederelements 60 gebildet. Der zweite Endbereich 90 weist eine stumpfwinkelige Abwinkelung 100 auf, welche eine Anlaufschräge 100 bildet. Die Anlaufschräge 100 wird beim Einschieben des Einschubgehäuses 20 in den Einschubschacht mittels eines Anlaufschiebers 110 unterfahren. Der Anlaufschieber 110 ist ebenso wie das Blattfederelement 60 an dem Einschubschacht angeordnet, wobei der Anlaufschieber 110 in einer Einschubrichtung 120 und einer Ausschubrichtung 130 bewegbar ist. Dazu sind Mittel vorgesehen, die den Anlaufschieber 110 auf die Bewegung in der Einschubrichtung 120 und in der Ausschubrichtung 130 begrenzen. Diese Mittel sind aus Gründen der Übersichtlichkeit nicht dargestellt.

Der Anlaufschieber 110 ist mit einem Federelement 140 an das Computergehäuse beziehungsweise den Einschubschacht federnd gekoppelt. Das Federelement 140 bewirkt eine Kraft auf den Anlaufschieber 110, die auf den Anlaufschieber 110 stets in Richtung einer Ruheposition wirkt. Ist der Einschubschacht leer, befindet sich der Anlaufschieber 110 in dieser Ruheposition.

Bevorzugt weist der Anlaufschieber 110 einen Mitnehmer 150 auf, damit der Anlaufschieber beim Einschieben des Einschubgehäuses 20 durch das Gehäuse bewegbar ist. Der Mitnehmer 150 wirkt bei dem dargestellten Ausführungsbeispiel mit einer Frontblende 160 des Einschubgehäuses, im Besonderen mit einer überstehenden Kante der Frontblende 160 zusammen.

Beim Einschieben des Einschubgehäuses 20 in den Einschubschacht wirkt die Frontblende 160 auf den Mitnehmer 150 und schiebt den Anlaufschieber 110 unter die Anlaufschräge 100 des längs gestreckten Blattfederelementes 60 hinein. Damit wird der erste Endbereich 70 des längs gestreckten Blattfederelements 60 in einer Art vorgespannt, dass mit dem Erreichen der Endposition für das Einschubgehäuse 20 der Bolzen 40 in die Bohrung 50 des Einschubgehäuses einrastet. Um ein sauberes Einführen des Einschubgehäuses zu ermöglichen und Fehlfunktionen zu vermeiden, ist eine Stützfeder 170 vorgesehen, welche ein Drehmoment in der Art bildet, dass das längs gestreckte Blattfederelement in einer vorbestimmten Position gehalten wird, solange das Einschubgehäuse die Endposition nicht erreicht hat. Die vorbestimmte Position ist zum Beispiel so definiert, dass der Verriegelungsbolzen 40 von dem Einschubgehäuse beabstandet ist. Erst mit dem Unterschieben des Anlaufschiebers 110 unter die Anlaufschräge 100 des längs gestreckten Blattfederelements 60 wird ein Drehmoment in das längs gestreckte Blattfederelement 60 eingebracht, so dass der Verriegelungsbolzen 40 mit einer Kraft in Richtung des Einschubgehäuses vorgespannt ist.

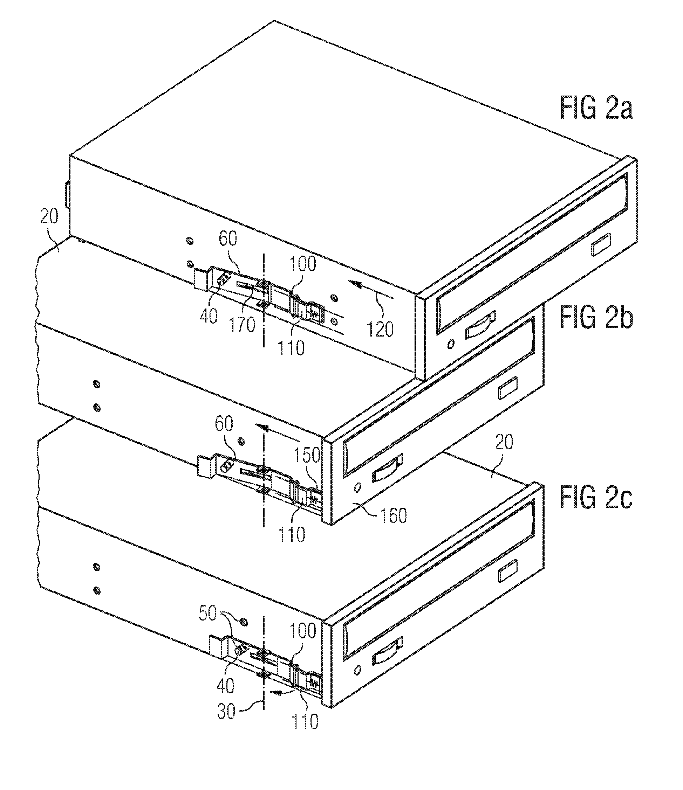

Die Figuren 2A mit 2B und 2C zeigen zur Verdeutlichung der Wirkungsweise der Befestigungsvorrichtung 10 in drei verschiedenen Arbeitspositionen einen Einschubvorgang des Einschubgehäuses 20 in den Einschubschacht des Computergehäuses. Die Figur 2A zeigt dabei den Anfang des Einschubvorgangs, bei dem sowohl der Anlaufschieber 110 als auch das längs gestreckte Blattfederelement 60 in der Ruheposition sind. Der Anlaufschieber 110 ist in diesem Zustand noch nicht unter die Anlaufschräge 100 eingerückt, so dass das Stützfederelement 170 den Bolzen 40 noch im Abstand zum Einschubgehäuse 20 hält. Damit wird verhindert, dass der Verriegelungsbolzen 40 beim Einschubvorgang mit Elementen des Einschubgehäuses 20 ungewollt verhackt und somit den Einschubvorgang behindert. Figur 2B zeigt eine Position, in der das Einschubgehäuse 20 bereits soweit in den Einschubschacht eingetaucht ist, dass die Frontblende 160 mit dem Mitnehmer 150 des Anlaufschiebers 110 in mechanischen Kontakt tritt. Das längs gestreckte Blattfederelement 60 ist in dieser Position noch unverändert. Der Anlaufschieber beginnt ab dieser Position seine Bewegung in Richtung der Anlaufschräge 100 des längs gestreckten Blattfederelementes 60.

In der Figur 2C ist der Anlaufschieber 110 mittels des Überstandes der Frontblende in Wirkverbindung mit dem Mitnehmer 150 unter die Anlaufschräge 100 eingefahren. Damit hat das längs gestreckte Blattfederelement 60 eine Drehung ausgeführt. Diese Drehung bewirkt eine Vorspannung auf den Bolzen 40. Beim Erreichen der Endposition, welche die Figur 2c zeigt, ist der Verriegelungsbolzen 40 in die Bohrung 50 verrastet. Die Drehung des längs gestreckten Blattfederelements 60 erfolgt dabei um die Schwenkachse 30. Diese Position definiert für die Befestigungsvorrichtung 10 die Arbeitsposition. In dieser Position ist der Verriegelungsbolzen 40 in die Bohrung 50 verrastet. Die Verriegelungsvorrichtung 10 fixiert in dieser Position das Einschubgehäuse 20 mit dem Bolzen 40 in dem Einschubschacht.

Zur Verbesserung der Qualität der Fixierung im Einschubschacht ist eine Mehrzahl der beschriebenen Befestigungsvorrichtungen möglich, ohne dabei den zeitlichen Aufwand für die Montage des Einschubgehäuses zu erhöhen. Denn alle Befestigungsvorrichtungen verrasten gleichermaßen beim Erreichen der Endposition des Einschubgehäuses. Somit ist mit der beschriebenen Befestigungsvorrichtung eine Fixierung in hoher Qualität ohne zeitlichen Mehraufwand erzielbar.

### Bezugszeichenliste

- 10: Befestigungsvorrichtung
- 20: Einschubgehäuse
- 30: Schwenkachse
- 40: Verriegelungsbolzen
- 50: Bohrung
- 60: Blattfederelement
- 70: erster Endbereich des Blattfederelements
- 80: L-förmige Abwinkelung
- 90: zweiter Endbereich
- 100: stumpfwinkelige Abwinkelung / Anlaufschräge
- 110: Anlaufschieber
- 120: Einschubrichtung
- 130: Ausschubrichtung
- 140: Stützfederelement
- 150: Mitnehmer
- 160: Frontblende

## Patentansprüche

1. Gehäuse für einen Computer mit einem Einschubschacht für Einschubgehäuse,
**gekennzeichnet durch**,
eine Befestigungsvorrichtung (10), welche ein Einschubgehäuse (20) einer Computerkomponente in einem Einschubschacht eines Computergehäuses fixiert und an einer Seitenwandung des Einschubschachtes angeordnet ist,
mit zumindest einem federnd gelagertem Verriegelungsbolzen (40), wobei die Befestigungsvorrichtung (10) dazu ausgebildet ist den Verriegelungsbolzen (40) **durch** das Einschieben des Einschubgehäuses (20) in den Einschubschacht vorzuspannen und mittels der Federkraft beim Erreichen einer Endposition in einer Bohrung (50) des Einschubgehäuses (20) zu halten.

2. Gehäuse nach Patentanspruch 1,
**dadurch gekennzeichnet, dass**
die federnde Lagerung des Verriegelungsbolzens (40) mittels eines Blattfederelements (60) gebildet ist.

3. Gehäuse nach Patentanspruch 2,
**dadurch gekennzeichnet, dass**
das Blattfederelement (60) an einer Schwenkachse (30), welche senkrecht zur Längsachse des Blattfederelements (60) und in einem Zentrumsbereich des Blattfederelements (60) angeordnet ist, schwenkbar an der Wandung des Einschubschachts gelagert ist, so dass sich das Blattfederelement (60) beidseitig der Schwenkachse (30) erstreckt und der Verriegelungsbolzen (40) an einem zur Schwenkachse (30) beabstandeten ersten Endbereich (70) des Blattfederelements (60) angeordnet ist.

4. Gehäuse nach Patentanspruch 3,
**dadurch gekennzeichnet, dass**
der erste Endbereich (70) des Blattfederelements (60) eine Abwinkelung (80) aufweist.

5. Gehäuse nach einem der Patentansprüche 3 bis 4,
**dadurch gekennzeichnet, dass**
ein zweiter Endbereich (90) des Blattfederelements (60) eine Anlaufschräge (100) aufweist, welche mittels einer stumpfwinkeligen Abwinkelung (100) des zweiten Endbereichs (90) des Blattfederelements (60) gebildet ist.

6. Gehäuse nach einem der Patentansprüche 3 bis 5,
**dadurch gekennzeichnet, dass**
ein Anlaufschieber (110) vorgesehen ist, welcher mittels des Einschubgehäuses (20) entgegen der Anlaufschräge (100) bewegbar ist, so dass die Anlaufschräge (100) durch den Anlaufschieber (110) von dem Einschubgehäuse (20) anhebbar ist.

7. Gehäuse nach Patentanspruch 6,
**dadurch gekennzeichnet, dass**
ein Stützfederelement (170) vorgesehen ist, dessen Federkraft entgegen einem durch den Anlaufschieber (110) am ersten Endbereich (70) erzeugten Drehmoment wirkt.

8. Gehäuse nach einem der Patentansprüche 6 bis 7,
**dadurch gekennzeichnet, dass**
der Anlaufschieber (110) an der Wandung des Einschubschachts angeordnet ist und in einer Ein- (120) und einer Ausschubrichtung (130) bewegbar ist, wobei ein Federelement (140) vorgesehen ist, das den Anlaufschieber (110) in der Ausschubrichtung (130) bis in eine Ruhelage bewegt.

9. Gehäuse nach einem der Patentansprüche 5 bis 7,
**dadurch gekennzeichnet, dass**
der Anlaufschieber (110) einen Mitnehmer (150) aufweist, welcher ihn mittels des Einschubgehäuses (20) in der Einschubrichtung (120) bewegt.

10. Gehäuse nach Patentanspruch 9,
**dadurch gekennzeichnet, dass**
der Mitnehmer (150) mit einer Frontblende (160) des Einschubgehäuses (20) zusammenwirkt.

11. Gehäuse nach einem der Patentansprüche 6 bis 10,
**dadurch gekennzeichnet, dass**
der Anlaufschieber (110) eine Auflaufschräge aufweist, wobei die Ebene der Auflaufschräge des Anlaufschiebers (110) zur Ebene der Anlaufschräge (100) innerhalb eines vorbestimmten Toleranzbereichs parallel ist.
